# EUROPEAN PATENT SPECIFICATION

(11) **EP 2 996 101 B1**
(45) Date of publication and mention of the grant of the patent: **26.06.2019**
(21) Application number: 14184533.9
(22) Date of filing: 12.09.2014
(51) Int. Cl.: G08G 1/16, B62D 15/02, B60R 1/02, B60R 1/12

(54) **Driver assistance system, method for assisting a driver during a parking manoeuvre and program product**
Fahrerassistenzsystem, Verfahren zur Unterstützung eines Fahrers beim Einparken und Programmprodukt
Système d'assistance au conducteur, procédé et programme pour assister un conducteur lors d'une manoeuvre de stationnement

(43) Date of publication of application: 16.03.2016
(73) Proprietor: Continental Automotive GmbH, 30165 Hannover (DE)
(72) Inventor: Lim, Kuan Fang Henry, 090043 Singapore (SG)
(74) Representative: Bobbert, Christiana

(56) References cited:
- WO-A1-82/02448
- DE-A1- 19 839 198
- DE-A1-102008 049 113
- JP-A- 2007 112 360
- US-A1- 2010 259 420
- US-A1- 2012 105 251
- US-A1- 2013 158 851
- US-A1- 2014 185 310

## Description

The present invention relates to a driver assistance system, a method for assisting a driver during a parking manoeuvre and a program product.

A vehicle may include one or more driver assistance systems, such as a collision avoidance system, driver drowsiness detection, a lane change assistance system etc. DE 10 2011 016 775 A1 discloses an assistance system for a vehicle for assisting a driver during a parking manoeuvre. This assistance system includes a sensor system for detecting the distance between the vehicle and objects in the vicinity of the vehicle and at least one display. The display provides optical, acoustic and/or tactile information relating to the distance to the objects and may be used to provide a warning to the driver. The display may include several light emitting elements to indicate to the driver whether the object, with which the vehicle will collide if the driver continues with the manoeuvre, is arranged to the left or the right of the vehicle.

US 2010/259420 A1 discloses a parking assist system which, after a vehicle has passed the side of a parking area formed between parked vehicles, assists parking of the vehicle from a stopped position of the vehicle to the parking area.

However, further driver assistance systems are desirable, which enable the driver to complete a parking manoeuvre more easily.

Therefore, an object of the invention is to provide a driver assistance system which enables the driver to complete a parking manoeuvre more easily.

According to the invention, a driver assistance system comprises processing means comprising computer program code for assisting a driver with perpendicular and/or parallel parking of the vehicle and visual output means. During a parking manoeuvre, the processing means causes the visual output means to indicate a direction of motion of the vehicle and a position of the steering wheel to the driver. The visual output means comprises four visual indicators arranged to indicate that the steering wheel is turned to the left or to the right for forward motion and to the left or to the right for backward motion of the vehicle.

A driver assistance system is provided which assists the driver by giving information to the driver as to whether the steering wheel is turned to the right of centre, to the left of centre or is positioned in the centre and the direction of motion of the vehicle. This additional visual information assists the driver to perform the parking manoeuvre.

The processing means may include one or more processors for processing computer program code and memory for storing the computer program code. The visual output means may include one or more light emitting components, for example light emitting diodes.

In an embodiment, the processing means is further configured to cause the visual output means to indicate the proximity of an object in the vicinity of the vehicle to the driver. In this embodiment, the driver assistance system may make use of a sensor system provided on the vehicle which is used to detect objects in the vicinity of the vehicle. The sensor system may also be used by further driver assistance systems of the vehicle. The sensors may use radar or ultrasound principles, for example, to detect the presence and position of objects within the range of the sensors.

The processing means may receive information from sensor system which indicates that an object is present in the vicinity of the vehicle. In this event, the processing means causes the visual output means of the driver assistance system to indicate this fact to the driver, for example by activating or modifying the output of the visual output means. This additional visual output may assist the driver in avoiding nearby objects such as vehicles, pillars, posts etc. when performing a parking manoeuvre.

The processing means may be further configured to cause the visual output means to indicate the proximity of the object with respect to the direction of motion of the vehicle. For example, if an object is detected to the front right of the vehicle whilst the vehicle is moving forward, the visual output means may provide a visual signal at the top right of a display area to indicate the position of the object to the driver. If an object is detected to the rear of the vehicle whilst the vehicle is moving forward, this object may not be indicated to the driver as the vehicle is not likely to collide with the vehicle as the vehicle is moving away from the object. As a further example, if an object is detected to the rear of the vehicle whilst the vehicle is moving backwards, the visual output means may provide a visual signal at the bottom centre of a display area.

In an embodiment, the processing means may cause the visual output means to indicate the proximity of the object to the driver. This may be performed by processing means instructing the visual output means to display intermittently and/or differing colours depending on the proximity of the object to the vehicle. For example, if the object is more than a metre away, the visual output means may take not be activated. If the object comes within a range of a predetermined value, for example, 20 cm of the vehicle, the visual output means may be adjusted to indicate this to the driver, for example by providing a flashing light rather than a static light. As the proximity between the vehicle and the object decreases further, the frequency of the flashing may be increased. Alternatively or in addition, the colour of the visual output means may be adjusted as the distance between the object and the vehicle decreases or if the distance between the object and the vehicle is less than a predetermined value.

In an embodiment, the processing means is further configured to receive a signal from one or more proximity sensors mounted on the vehicle, determine from the signal if an object is present, and if an object is present, to determine the distance between the vehicle and the object. If the distance is less than a predetermined value, the processing means causes the visual output means and/or an audio visual means to indicate the position of the object to the driver. This additional visual and/or audio signal makes the driver aware of the fact that the vehicle may collide with the object and makes the driver aware of the position of the object with respect to the vehicle so that the driver can decide which action to take to avoid colliding with the object.

The proximity sensors may be provided on the vehicle as part of a further driver assistance system or systems. The processing means may analyse and interpret signals received from the proximity sensors to determine if an object is present within the range of the sensor. In a further embodiment, this information is provided to the processing means by a further system or processing means rather than the processing means receiving and analysing the signals directly.

An audio output means may also be used to assist the driver. The audio output means may be a loudspeaker of an infotainment system of the vehicle, for example. The processing means may be further configured to instruct an audio output means to increase the loudness of an audio tone and/or increase the frequency of an audio tone as the proximity of the vehicle to the object decreases. The audio output means may be a loudspeaker provided on the vehicle, for example. As the proximity between the vehicle and the object decreases, an audio tone may be repeated more frequently, the type of audio tone or the pitch of the audio tone may be changed to indicate that the distance is decreasing.

The visual output means comprises four visual indicators. These visual indicators may be four light emitting elements such as lights, light emitting regions, such as strips, circles etc. Each visual indicator may be controllable by the processing means to emit one, two or more colours and/or to emit light intermittently, i.e. flash.

The four visual indicators may be arranged at corners of a square or rectangle, whereby the visual indicators are arranged to correspond to the front left, front right, back left and back right of the vehicle. This arrangement is useful for indicating the position of an object with respect to the vehicle as the visual indicator closest to the position of the object can be activated. For example, if the object is positioned to the back and the right of the vehicle, the lower right visual indicator may be activated. If the object is positioned in front of the vehicle, both the upper left and upper right visual indicator may be activated.

The four visual indicators also indicate to the driver in which direction the vehicle steering wheel is turned. For forward motion, an upper left and an upper right visual indicator may be activated to indicate that the steering wheel should be turned to the left or to the right, respectively. For backward motion of the vehicle, the lower left or lower right visual indicator may be activated to indicate to the driver that the vehicle steering wheel is to the left or to the right, respectively.

The upper right and upper left visual indicator may also be used to indicate that the steering wheel is turned to the left or to the right for forward motion and the lower left and lower right visual indicator may be used to indicate that the steering wheel is turned to the left or to the right for backward motion of the vehicle. The processing means may also be configured to instruct two visual indicators to emit a visual signal for straight forward motion, for example to illuminate both the upper visual indicators, and straight backward motion of the vehicle, for example to illuminate both lower visual indicators.

The visual output means may have different forms. For example, the visual output means may be arranged at the rear view mirror of the vehicle or a display of the vehicle, for example the display of an infotainment system. Both the rear view mirror and display are within the line of sight of the driver and provide a useful position for the visual output means of the driver assistance system.

The visual output means may be integrated in the rear view mirror or in the display, for example in the frame of the rear view mirror or the display. Alternatively, the visual output means may be provided as a separate component, for example as a separate frame which is configured to fit a rear view mirror or a display of the vehicle.

A method for assisting a driver during a parking manoeuvre is provided which comprises indicating the direction of motion of the vehicle and a position of the steering wheel to the drive by way of a visual output means during a parking manoeuvre. The visual output means comprises four visual indicators arranged to indicate that the steering wheel is turned to the left or to the right for forward motion and to the left or to the right for backward motion of the vehicle.

In an embodiment, the method further comprises receiving a signal from one or more proximity sensors mounted on the vehicle, determining from the signal if an object is present, and, if an object is present, determining the distance between the vehicle and the object. If the distance is less than a predetermined value, the visual output means and/or an audio visual means are activated to indicate to the position of the object to the driver.

In an embodiment, the proximity of the object in the direction of motion of the vehicle is indicated to the driver by modification of the output of the visual output means and/or by modification of the output of an audio output means.

A program product is also provided which comprises computer program code tangibly embodied thereon that when executed on a processor, causes the processor to perform the method of one of the embodiments described above. The program product may be a memory device of the vehicle, for example a memory device of the engine management system or a vehicle control system or a driver assistance system.

Embodiments will now be described with reference to the drawings.
Figure 1 illustrates a vehicle including a driver assistance system according to a first embodiment,
Figure 2 illustrates a visual output means for use with the driver assistance system,
Figure 3 illustrates the use of the driver assistance system for a perpendicular parking manoeuvre, and
Figure 4 illustrates the use of the driver assistance system for the parallel parking manoeuvre.

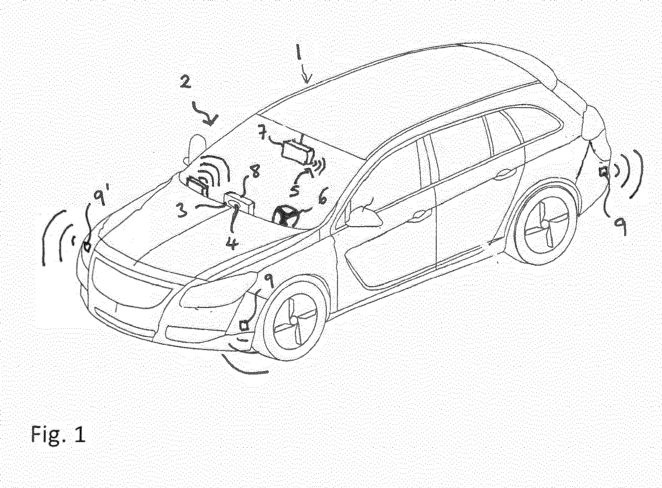

Figure 1 illustrates a vehicle 1 including a driver assistance system 2 according to a first embodiment. The driver assistance system 2 includes processing means 3 including computer program code 4 for assisting a driver with perpendicular and/or parallel parking of the vehicle 1 and visual output means 5. During a parking manoeuvre, the processing means 3 causes the visual output means 5 to indicate a direction of motion of the vehicle 1 and the position of the steering wheel 6 to the driver.

The visual output means 5 may be positioned within the vehicle 1 such that it is easily seen by the driver. The visual output means may be positioned at the rear view mirror 7 of the vehicle 1 or a display 8 of the vehicle 1, for example. The visual output means 5 may be provided as a separate component which is mounted around the rear view mirror 7 or the display 8 or may be integrated within a further component of the vehicle 1 such as the rear view mirror 7 or display 8. The display 8 may be part of vehicle infotainment system, for example.

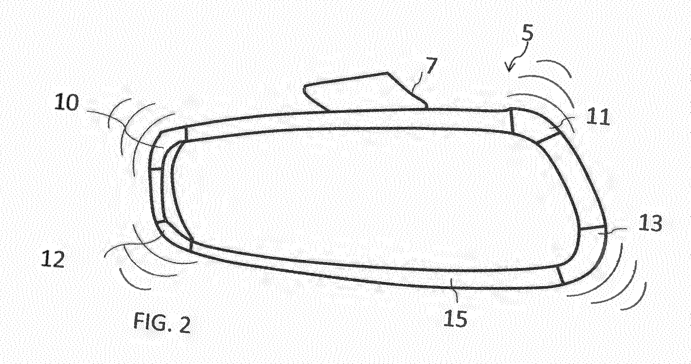

The visual output means 5 may include four light emitting regions or lights positioned at the corners of a square or rectangle. Figure 2 illustrates a visual output means 5 including four lights 10, 11, 12, 13 arranged at the corners of a rectangle for use with the driver assistance system 22 which is part of a frame 15 of the rear view mirror 7.

Forward motion of the vehicle 1 may be indicated by the upper two lights 10, 11 and backward motion of the vehicle 1 may be indicated by the lower two lights 12, 13. The position of the steering wheel 6 to the left of centre may be indicated by the left-hand lights 10, 12, the position of the steering wheel 6 to the right of centre may be indicated by the right-hand lights 11, 13 and a position of centre may be indicated by illuminating the top two lights 10, 11 at the same time during forward motion and the bottom two lights 12, 13 at the same time during backward motion of the vehicle 1.

The driver assistance system 2 may also make use of proximity sensors 9 which are provided on the vehicle 1. The proximity sensors 9 may be used to detect objects in the vicinity of the vehicle 1, for example within a predetermined distance or range of each of the proximity sensors 9. The processing means 3 may receive a signal from one or more of the proximity sensors 9 and determine from the signal if an object is present within the range of the proximity sensor 9. In the event that an object is detected, the distance between the object and the vehicle 1 can be determined. If the object is within a predetermined distance of the vehicle 1, the processing means 3 can instruct the visual output means 5 to indicate the presence of an object to the driver.

For example, if the vehicle 1 is moving forward and a proximity sensor 9 detects the presence of an object to the front right of the vehicle 1, the top right visual light 10 may be activated, for example to flash or change colour to indicate to the driver that the vehicle 1 may collide with the object if driver continues with the manoeuvre without adjustment.

In order to provide further assistance to the driver, the processing means 3 may be configured to instruct an audio means 14, such as a sound system of a vehicle infotainment system, to indicate to the driver that that an object is present in the vicinity of vehicle 1 with which the vehicle 1 may collide. The processing means 3 may instruct the audio means 14 to increase the loudness of audio tone and/or increase the frequency of an audio tone as the proximity of the vehicle 1 to the object decreases. This gives the driver further indication of how much space is available before the vehicle 1 collides with the object.

A combination of audio and visual outputs of the driver assistance system 2 indicates to the driver the position of the object relative to the vehicle 1 from the position of the illuminated lights of the visual output means 5 and the distance of the vehicle 1 to the object by the audio output means alone or together with modification of the visual output means 5.

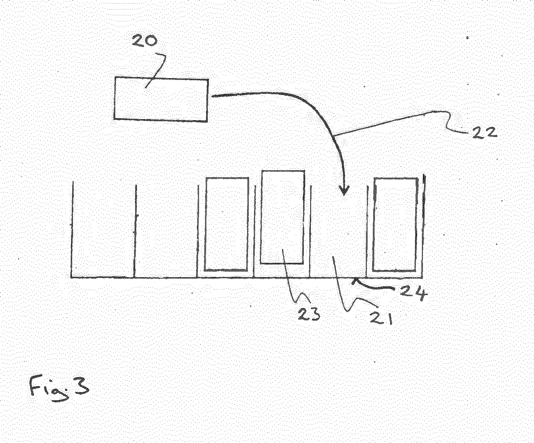

Figure 3 illustrates the use of the driver assistance system 2 for a perpendicular parking manoeuvre, in which the driver wishes to manoeuvre a vehicle 20 into the parking space 21 in forward motion. The trajectory of the parking manoeuvre is indicated with the arrow 22. First, the driver turns the steering wheel to the right in which case the top right visual indicator 11 is illuminated. The top right indicator 11 may be a green flashing light if the sensors and, in particular a proximity sensor 9' arranged to detect a region to the front right of the vehicle 20, determines that there is enough space between the front right of the vehicle 20 and the vehicle 23 parked in an adjoining parking space. As the vehicle 20 nears the wall 24 defining the rear boundary of the parking space 21, an audio tone may sound and the two top lights 10, 11 are illuminated to indicate forward straight forward motion until the distance between the front of the vehicle 20 and the wall 24 is less than a predetermined distance, in which case the visual indicators 10, 11 may change colour, for example to red, to indicate to the driver that the driver should apply the brake. The driver may then select reverse gear in order to move the vehicle 20 away from wall 24 to complete the marking parking manoeuvre whereupon the two lower lights illuminate 12, 13.

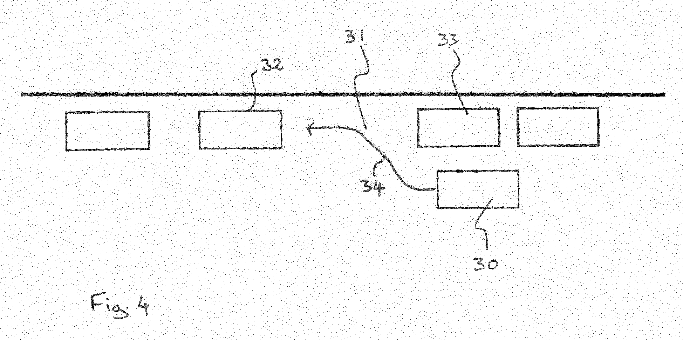

Figure 4 illustrates the use of the driver assistance system 2 for a parallel parking manoeuvre, in which the driver wishes to park a vehicle 30 in the space 31 between two parked vehicles 32 and 33. The parking trajectory is indicated with the arrow 34. This embodiment, the driver puts the vehicle 30 into reverse and turns the steering wheel to the left in order to move the vehicle 30 into the space 31. Therefore, the bottom left light 12 of the visual output means 5 will become illuminated as the vehicle 30 nears the parked vehicle 32. The combination of the audio output means and visual output means 5 indicates a proximity and distance between the parked vehicle 32 to the rear of the vehicle 30, for example by increasing the frequency of an audio tone and/or decreasing intervals between flashes of light 12 or changing the colour of the light 12, for example to red, when the distance between the parked vehicle 32 and the vehicle 30 has decreased below a predetermined value. The driver may then put the vehicle 30 into drive or first gear and turn the steering wheel to the left, whereupon the top left light 10 of the visual output means 5 is illuminated, in order to complete a parking manoeuvre of the vehicle 30 in the space 31.

The driver assistance system 2 may also be used to assist the driver in achieving a suitable clearance around the vehicle 1; 20; 30. For example, as the vehicle 30 moves forward within the parking space 31, the top two red lights 10, 11 may be illuminated when distance between the vehicle 30 and the parked vehicle 33 is less than a predetermined value. This case, the driver may further select reverse gear to move the vehicle 30 backwards and park in the centre of the space 31 whereupon the two lower lights 12, 13 are illuminated green for straight backward motion and then red when the vehicle 30 is positioned in the centre of parking space 31. At this point, all four lights 10, 11, 12, 13 are red to confirm to the driver that the parking manoeuvre is completed.

## Claims

1. A driver assistance system (2), comprising:
processing means (3) comprising computer program code (4) for assisting a driver with perpendicular and/or parallel parking of a vehicle (1; 20; 30), and
visual output means (5),
**characterized in that**
during a parking manoeuvre, the processing means (3) causes the visual output means (5) to indicate a direction of motion of the vehicle (1; 20; 30)and a position of the steering wheel (6) to the driver, and
the visual output means (5) comprises four visual indicators (10, 11, 12, 13) arranged to indicate that the steering wheel (6) is turned to the left or to the right for forward motion and to the left or to the right for backward motion of the vehicle (1; 20; 30).

2. The driver assistance system (2) according to claim 1, **characterised in that** the processing means (3) is further configured to cause the visual output means (5) to indicate the proximity of an object in the vicinity of the vehicle (1; 20; 30) to the driver.

3. The driver assistance system (2) according to claim 2, **characterised in that** the processing means (3) is further configured to cause the visual output means (5) to indicate the proximity of the object with respect to the direction of motion of the vehicle (1; 20; 30).

4. The driver assistance system (2) according to claim 3, **characterised in that** the processing means (3) is further configured to:
receive a signal from one or more proximity sensors (9) mounted on the vehicle (1; 20; 30),
determine from the signal if an object is present, and if an object is present to
determine the distance between the vehicle (1; 20; 30) and the object, and
if the distance is less than a predetermined value, cause the visual output means (5) and/or an audio visual means (14) to indicate the position of the object to the driver.

5. The driver assistance system (2) according to one of claims 2 to 4, **characterised in that**
the processing means (3) is further configured to instruct an audio means (14) to increase the loudness of an audio tone and/or increase the frequency of an audio tone as the distance of the vehicle (1; 20; 30) to the object decreases.

6. The driver assistance system (2) according to one of claims 2 to 5, **characterised in that**
the processing means (3) is further configured to instruct the visual output means (5) to display intermittently and/or differing colours depending on the proximity of the object to the vehicle(1; 20; 30).

7. The driver assistance system (2) according to one of claims 1 to 6, **characterised in that** the processing means (3) is configured to instruct two visual indicators (10, 11) to emit a visual signal for straight forward motion and two visual indicators (12, 13) straight backward motion of the vehicle (1; 20; 30).

8. The driver assistance system (2) according to one of claims 1 to 7, **characterised in that**
the visual output means (5) is arranged around a rear view mirror (7) or a display (8) of the vehicle (1; 20; 30).

9. The driver assistance system (2) according to one of claims 1 to 7, **characterised in that**
the visual output means (5) is arranged in a frame (15) configured to surround a rear view mirror (7) or a display (8) of the vehicle (1; 20; 30).

10. A method for assisting a driver during a parking manoeuvre, comprising:
during a parking manoeuvre, indicating the direction of motion of the vehicle (1; 20; 30) and a position of the steering wheel (6) to the driver by way of a visual output means (5), **characterised in that**
the visual output means (5) comprises four visual indicators (10, 11, 12, 13) arranged to indicate that the steering wheel (6) is turned to the left or to the right for forward motion and to the left or to the right for backward motion of the vehicle (1; 20; 30).

11. The method according to claim 10, further comprising
receiving a signal from one or more proximity sensors (9) mounted on the vehicle (1; 20; 30),
determining from the signal if an object is present, and, if an object is present,
determining the distance between the vehicle (1; 20; 30) and the object, and if the distance is less than a predetermined value, cause the visual output means (5) and/or an audio visual means (14) to indicate the position of the object to the driver.

12. The method according to claim 11, **characterised in that** the proximity of the object in the direction of motion of the vehicle (1; 20; 30) is indicated by modification of the output of the visual output means (5) and/or by modification of the output of an audio output means (14).

13. A program product, comprising computer program code (4) tangibly embodied thereon that when executed on a processor, causes the processor to perform the method of one of claims 10 to 12.

## Patentansprüche

1. Fahrerassistenzsystem (2), umfassend:
Verarbeitungsmittel (3), umfassend einen Computerprogrammcode (4) zur Unterstützung eines Fahrers beim lotrechten und/oder parallelen Parken eines Fahrzeuges (1; 20; 30) und
optische Ausgabemittel (5),
**dadurch gekennzeichnet, dass**
während eines Parkmanövers das Verarbeitungsmittel (3) bewirkt, dass das optische Ausgabemittel (5) dem Fahrer eine Bewegungsrichtung des Fahrzeuges (1; 20; 30) und eine Stellung des Lenkrades (6) anzeigt, und
das optische Ausgabemittel (5) vier optische Anzeiger (10, 11, 12, 13) umfasst, die so angeordnet sind, dass sie anzeigen, dass das Lenkrad (6) nach links oder nach rechts für eine Vorwärtsbewegung und nach links oder nach rechts für eine Rückwärtsbewegung des Fahrzeuges (1; 20; 30) gedreht ist.

2. Fahrerassistenzsystem (2) nach Anspruch 1, **dadurch gekennzeichnet, dass** das Verarbeitungsmittel (3) ferner dazu ausgestaltet ist zu bewirken, dass das optische Ausgabemittel (5) dem Fahrer die Nähe eines Objektes in der Nähe des Fahrzeuges (1; 20; 30) anzeigt.

3. Fahrerassistenzsystem (2) nach Anspruch 2, **dadurch gekennzeichnet, dass** das Verarbeitungsmittel (3) ferner dazu ausgestaltet ist zu bewirken, dass das optische Ausgabemittel (5) die Nähe des Objektes bezüglich der Bewegungsrichtung des Fahrzeuges (1; 20; 30) anzeigt.

4. Fahrerassistenzsystem (2) nach Anspruch 3, **dadurch gekennzeichnet, dass** das Verarbeitungsmittel (3) ferner für Folgendes ausgestaltet ist:
Empfangen eines Signals von einem oder mehreren Näherungssensoren (9), die an dem Fahrzeug (1; 20; 30) angebracht sind,
Bestimmen, anhand des Signals, ob ein Objekt vorhanden ist, und, falls ein Objekt vorhanden ist,
Bestimmen der Entfernung zwischen dem Fahrzeug (1; 20; 30) und dem Objekt und,
falls die Entfernung geringer als ein vorgegebener Wert ist, Bewirken, dass das optische Ausgabemittel (5) und/oder ein audiovisuelles Mittel (14) dem Fahrer die Position des Objektes anzeigt.

5. Fahrerassistenzsystem (2) nach einem der Ansprüche 2 bis 4, **dadurch gekennzeichnet, dass**
das Verarbeitungsmittel (3) ferner dazu ausgestaltet ist,ein Audiomittel (14) anzuweisen, mit abnehmender Entfernung des Fahrzeuges (1; 20; 30) zu dem Objekt die Lautstärke eines Tons zu erhöhen und/oder die Frequenz eines Tons zu erhöhen.

6. Fahrerassistenzsystem (2) nach einem der Ansprüche 2 bis 5, **dadurch gekennzeichnet, dass**
das Verarbeitungsmittel (3) ferner dazu ausgestaltet ist, das optische Ausgabemittel (5) anzuweisen, in Abhängigkeit von der Nähe des Objektes zu dem Fahrzeug (1; 20; 30) intermittierend und/oder unterschiedliche Farben anzuzeigen.

7. Fahrerassistenzsystem (2) nach einem der Ansprüche 1 bis 6, **dadurch gekennzeichnet, dass** das Verarbeitungsmittel (3) dazu ausgestaltet ist, zwei optische Anzeiger (10, 11) anzuweisen, ein optisches Signal für eine gerade Vorwärtsbewegung und zwei optische Anzeiger (12, 13) gerade Rückwärtsbewegung des Fahrzeuges (1; 20; 30) auszusenden.

8. Fahrerassistenzsystem (2) nach einem der Ansprüche 1 bis 7, **dadurch gekennzeichnet, dass**
das optische Ausgabemittel (5) um einen Rückspiegel (7) oder eine Anzeige (8) des Fahrzeuges (1; 20; 30) herum angeordnet ist.

9. Fahrerassistenzsystem (2) nach einem der Ansprüche 1 bis 7, **dadurch gekennzeichnet, dass**
das optische Ausgabemittel (5) in einem Rahmen (15) angeordnet ist, der so ausgestaltet ist, dass er einen Rückspiegel (7) oder eine Anzeige (8) des Fahrzeuges (1; 20; 30) umgibt.

10. Verfahren zur Unterstützung eines Fahrers während eines Parkmanövers, umfassend:
während eines Parkmanövers, Anzeigen, für den Fahrer, der Bewegungsrichtung des Fahrzeuges (1; 20; 30) und einer Stellung des Lenkrades (6) mittels eines optischen Ausgabemittels (5), **dadurch gekennzeichnet, dass** das optische Ausgabemittel (5) vier optische Anzeiger (10, 11, 12, 13) umfasst, die dazu angeordnet sind anzuzeigen, dass das Lenkrad (6) nach links oder nach rechts für eine Vorwärtsbewegung und nach links oder nach rechts für eine Rückwärtsbewegung des Fahrzeuges (1; 20; 30) gedreht ist.

11. Verfahren nach Anspruch 10, ferner umfassend:
Empfangen eines Signals von einem oder mehreren Näherungssensoren (9), die an dem Fahrzeug (1; 20; 30) angebracht sind,
Bestimmen, anhand des Signals, ob ein Objekt vorhanden ist, und, falls ein Objekt vorhanden ist,
Bestimmen der Entfernung zwischen dem Fahrzeug (1; 20; 30) und dem Objekt und, falls die Entfernung geringer als ein vorgegebener Wert ist, Bewirken, dass das optische Ausgabemittel (5) und/oder ein audiovisuelles Mittel (14) dem Fahrer die Position des Objektes anzeigt.

12. Verfahren nach Anspruch 11, **dadurch gekennzeichnet, dass** die Nähe des Objektes in der Bewegungsrichtung des Fahrzeuges (1; 20; 30) durch eine Abwandlung der Ausgabe des optischen Ausgabemittels (5) und/oder durch eine Abwandlung der Ausgabe eines Audioausgabemittels (14) angezeigt wird.

13. Programmprodukt, das einen fassbar darauf vorliegenden Computerprogrammcode (4) umfasst, der, wenn er auf einem Prozessor ausgeführt wird, bewirkt, dass der Prozessor das Verfahren nach einem der Ansprüche 10 bis 12 durchführt.

## Revendications

1. Système d'assistance à la conduite (2), comprenant :
un moyen de traitement (3) comprenant un code de programme informatique (4), destinée à assister un conducteur pour le stationnement perpendiculaire et/ou parallèle d'un véhicule (1 ; 20 ; 30), et
un moyen de sortie visuelle (5),
**caractérisé en ce que**,
lors d'une manoeuvre de stationnement, le moyen de traitement (3) entraîne l'indication au conducteur d'une direction de déplacement du véhicule (1 ; 20 ; 30) et d'une position du volant (6) par le moyen de sortie visuelle (5), et
le moyen de sortie visuelle (5) comprend quatre indicateurs visuels (10, 11, 12, 13) prévus pour signaler que le volant (6) est braqué vers la gauche ou la droite en marche avant et vers la gauche ou la droite en marche arrière du véhicule (1 ; 20 ; 30).

2. Système d'assistance à la conduite (2) selon la revendication 1,
**caractérisé en ce que** le moyen de traitement (3) est en outre prévue pour entraîner l'indication au conducteur de la proximité d'un objet dans l'environnement du véhicule (1 ; 20 ; 30) par le moyen de sortie visuelle (5).

3. Système d'assistance à la conduite (2) selon la revendication 2, **caractérisé en ce que** le moyen de traitement (3) est en outre prévue pour entraîner l'indication par le moyen de sortie visuelle (5) de la proximité de l'objet par rapport à la direction de déplacement du véhicule (1 ; 20 ; 30).

4. Système d'assistance à la conduite (2) selon la revendication 3,
**caractérisé en ce que** le moyen de traitement (3) est en outre prévue pour :
recevoir un signal d'un ou de plusieurs capteurs de proximité (9) montés sur le véhicule (1 ; 20 ; 30),
déterminer à partir du signal si un objet est présent, et si un objet est présent,
déterminer la distance entre le véhicule (1 ; 20 ; 30) et l'objet, et
si la distance est inférieure à une valeur définie, entraîner l'indication de la position de l'objet au conducteur par le moyen de sortie visuelle (5) et/ou par un moyen audiovisuel (14).

5. Système d'assistance à la conduite (2) selon l'une des revendications 2 à 4, **caractérisé en ce que**
le moyen de traitement (3) est en outre prévue pour commander l'élévation du volume sonore et/ou l'élévation de la fréquence du volume sonore par une unité audio (14) à mesure que la distance diminue entre le véhicule (1 ; 20 ; 30) et l'objet.

6. Système d'assistance à la conduite (2) selon l'une des revendications 2 à 5, **caractérisé en ce que** le moyen de traitement (3) est en outre prévue pour commander un affichage intermittent et/ou de couleurs différentes par le moyen de sortie visuelle (5) en fonction de la proximité de l'objet au véhicule (1 ; 20 ; 30).

7. Système d'assistance à la conduite (2) selon l'une des revendications 1 à 6, **caractérisé en ce que** le moyen de traitement (3) est prévue pour commander l'émission par deux indicateurs visuels (10, 11) d'un signal visuel pour un déplacement rectiligne en marche avant et par deux indicateurs visuels (12, 13) déplacement rectiligne en marche arrière du véhicule (1 ; 20 ; 30).

8. Système d'assistance à la conduite (2) selon l'une des revendications 1 à 7, **caractérisé en ce que**
le moyen de sortie visuelle (5) est prévue autour d'un rétroviseur (7) ou d'un écran (8) du véhicule (1 ; 20 ; 30).

9. Système d'assistance à la conduite (2) selon l'une des revendications 1 à 7, **caractérisé en ce que**
le moyen de sortie visuelle (5) est disposée dans un cadre (15) prévu pour entourer un rétroviseur (7) ou un écran (8) du véhicule (1 ; 20 ; 30).

10. Procédé pour assister un conducteur pendant une manoeuvre de stationnement, comprenant :
lors d'une manoeuvre de stationnement, l'indication au conducteur de la direction de déplacement du véhicule (1 ; 20 ; 30) et d'une position du volant (6) par voie d'un moyen de sortie visuelle (5), **caractérisé en ce que** le moyen de sortie visuelle (5) comprend quatre indicateurs visuels (10, 11, 12, 13) prévus pour signaler que le volant (6) est braqué vers la gauche ou la droite en marche avant et vers la gauche ou la droite en marche arrière du véhicule (1 ; 20 ; 30).

11. Procédé selon la revendication 10, comprenant en outre la réception d'un signal d'un ou de plusieurs capteurs de proximité (9) montés sur le véhicule (1 ; 20 ; 30),
la détermination à partir du signal si un objet est présent, et, si un objet est présent,
la détermination de la distance entre le véhicule (1 ; 20 ; 30) et l'objet, et, si la distance est inférieure à une valeur définie, l'entraînement de l'indication de la position de l'objet au conducteur par le moyen de sortie visuelle (5) et/ou par un moyen audiovisuel (14).

12. Procédé selon la revendication 11, **caractérisé en ce que** la proximité de l'objet dans la direction de déplacement du véhicule (1 ; 20 ; 30) est indiquée en modifiant la sortie du moyen de sortie visuelle (5) et/ou en modifiant la sortie d'un moyen de sortie audio (14).

13. Produit de programme, comprenant un code de programme informatique (4) enregistré tangiblement et qui, exécuté sur un processeur, entraîne l'exécution par ledit processeur du procédé selon l'une des revendications 10 à 12.
